# FASCICULE DE BREVET EUROPEEN

(11) **EP 2 651 595 B1**
(45) Date de publication et mention de la délivrance du brevet: **03.02.2016**
(21) Numéro de dépôt: 11797000.4
(22) Date de dépôt: 14.12.2011
(51) Int. Cl.: B23K 26/12, B23K 26/40, B23K 26/06

(54) **DISPOSITIF DE DÉCOUPE DE STRUCTURE COMPRENANT DES NANO-OBJETS FILAIRES ET PROCÉDÉ ASSOCIÉ**
VORRICHTUNG UND VERFAHREN ZUM SCHNEIDEN VON DRAHTFÖRMIGEN NANO-SKALIGEN GEGENSTÄNDEN
DEVICE AND METHOD FOR CUTTIN NANO-SCALE FILAMENTARY OBJECTS

(30) Priorité: 16.12.2010 FR 1060628
(43) Date de publication de la demande: 23.10.2013
(73) Titulaire: Commissariat à l'Énergie Atomique et aux Énergies Alternatives, 75015 Paris (FR)
(72) Inventeur: BOULANGER, Pascal, F-13510 Eguilles (FR); SUBLEMONTIER, Olivier, F-92260 Fontenay-aux-roses (FR); GOBERT, Olivier, F-28320 Gallardon (FR)
(74) Mandataire: Ilgart, Jean-Christophe
(86) Numéro de dépôt international: PCT/EP2011/072678
(87) Numéro de publication internationale: WO 2012/080291

(56) Documents cités:
- WO-A1-2007/012215
- WO-A1-2008/033135
- WO-A2-2007/149109
- US-A- 5 948 172

## Description

L'invention concerne un dispositif selon le préambule de la revendication 1, pour la découpe de structures comprenant des nano-objets filaires. L'invention concerne également un procédé de découpe mis en oeuvre par le dispositif de l'invention.

Par nano-objets filaires, il faut entendre, plus particulièrement, des nano-tubes ou des nano-fils.

Par structure comprenant des nano-objets filaires, il faut entendre, par exemple, un composite comprenant des nano-tubes sous la forme d'un tapis de nano-tubes enrobés de polymère ou une structure constituée uniquement d'un tapis de nano-tubes.

Par découpe de structure comprenant des nano-objets filaires, il faut entendre, par exemple, l'opération de séparation d'un tapis de nano-tubes d'un substrat sur lequel il adhère, l'amincissement d'un tapis de nano-tubes pour, par exemple, former plusieurs tapis de nano-tubes distincts à partir d'un seul tapis de nano-tubes, ou encore l'ouverture des têtes des nano-tubes d'un tapis de nano-tubes.

La réalisation d'un tapis de nano-tubes de carbone s'obtient, par exemple, par une synthèse adaptée sur substrat. Le tapis de nano-tubes doit ensuite être séparé du substrat.

Selon l'art connu, la séparation, ou décollement, d'un tapis de nano-tubes du substrat sur lequel le tapis adhère est difficile à réaliser. Pour des tapis de faibles épaisseurs, par exemple inférieures à 100µm, la séparation s'avère presque impossible. La demande de brevet WO 2007/149109 A2 divulgue ainsi le décollement d'un tapis de nano-tubes par la technique de micro-électronique connue sous le nom de « lift-off ». Le tapis de nano-tubes est décollé par morceaux à l'aide d'un laser nanoseconde (i.e. un laser qui émet des impulsions dont la largeur est de quelques nano-secondes). Les inconvénients de ce décollement sont non seulement que le tapis ne peut pas être décollé dans son entier, mais également qu'il n'est pas possible de conserver l'alignement des nano-tubes une fois le décollement des morceaux effectués. L'invention ne présente pas ces inconvénients.

En ce qui concerne l'amincissement des tapis de nano-tubes selon l'art connu, il est réalisé par polissage mécanique, polissage mécano-chimique, attaque chimique ou encore attaque plasma. Chacun de ces procédés d'amincissement présente de nombreux inconvénients. Les inconvénients de l'amincissement par polissage mécanique sont une perte importante de matière, une durée trop importante de l'intervention (la vitesse d'abrasion finale est de quelques dizaines de nanomètres par minute et dépend du matériau d'enrobage des nano-tubes), une limitation des surfaces pouvant être traitées (galettes ou « wafers » de 12 pouces maximum), une impossibilité d'effectuer l'amincissement en continu. Les inconvénients de l'amincissement par polissage mécano-chimique sont à peu près identiques à ceux du polissage mécanique, à l'exception de la durée d'intervention qui est ici moins longue. Un inconvénient supplémentaire est toutefois l'utilisation de produits chimiques. Les inconvénients de l'attaque chimique sont, outre l'utilisation de produits chimiques, une découpe imprécise et une détérioration des nano-tubes. En ce qui concerne l'attaque plasma, les inconvénients en sont principalement la lenteur de l'intervention (la vitesse d'abrasion est de quelques dizaines de nanomètres par minute et dépend du matériau d'enrobage des nano-tubes) et la détérioration des nanotubes.

Le procédé d'amincissement de l'invention ne présente pas ces inconvénients.

### Exposé de l'invention

L'invention concerne un dispositif de découpe de structure comprenant des nano-objets filaires sensiblement orientés selon un même axe, caractérisé en ce qu'il comprend :
- une source laser apte à émettre un faisceau laser sous la forme d'impulsions laser ayant une largeur comprise entre 1 Femtoseconde et 300 Femtosecondes ;
- des moyens aptes à ajuster l'énergie de chaque impulsion laser émise entre 0,1µJ et 10mJ ;
- des moyens aptes à régler une fréquence de répétition des impulsions laser émises entre 10Hz et 10kHz ;
- des moyens aptes à polariser rectilignement les impulsions laser émises ;
- des moyens aptes à focaliser sur les nano-objets filaires de la structure les impulsions laser polarisées rectilignement ; et
- une enceinte de confinement qui comprend :
   a) un hublot transparent à la longueur d'onde des impulsions laser,
   b) un support sur lequel la structure à découper est placée,
   c) des moyens aptes à déplacer le support de sorte qu'il en résulte un déplacement relatif du faisceau laser par rapport aux nano-objets filaires de la structure, et
   d) des moyens pour évacuer hors de l'enceinte les débris qui résultent de la découpe.

On entend par « moyens aptes à focaliser » les impulsions laser, des moyens optiques aptes à concentrer le maximum d'énergie des impulsions laser qui les traversent soit en un point unique (dit alors « point focal »), soit sur un segment de droite perpendiculaire à la direction de propagation des impulsions laser (c'est le cas de la nappe laser), soit sur une ligne parallèle à la direction de propagation des impulsions laser (c'est le cas de l'axicon).

L'invention concerne également un procédé de découpe de structure comprenant des nano-objets filaires qui est mis en oeuvre par le dispositif de découpe de l'invention. Comme cela a déjà été mentionné précédemment, par découpe de structure comprenant des nano-objets filaires, il faut entendre, par exemple, l'opération de séparation d'un tapis de nano-tubes du substrat sur lequel il adhère, l'amincissement d'un tapis de nano-tubes pour, par exemple, former plusieurs tapis de nano-tubes distincts à partir d'un premier tapis de nano-tubes, ou encore l'ouverture des têtes des nano-tubes d'un tapis de nano-tubes.

Le procédé de découpe de l'invention conduit avantageusement, par exemple, à la formation de tapis de nano-tubes de très faibles épaisseurs (typiquement 100µm, voire moins).

Dans la suite de la description, le procédé de découpe de nano-objet filaire de l'invention concerne la découpe de nano-tube. De façon plus générale, cependant, le procédé de découpe de l'invention concerne la découpe de tout type de nano-objet filaire comme, par exemple :
- les nanotubes inorganiques, notamment choisis dans le groupe constitué par des nanotubes d'imogolite, des nanotubes de nitrure de bore (BN), des nanotubes d'oxyde de zinc (ZnO), des nanotubes de nitrure de gallium (GaN), des nanotubes de nitrure de silicium (Si3N4), des nanotubes du bisulfure de tungstène (WS2), des nanotubes de bisulfure de molybdène (MoS2), des nanotubes de séléniure de tungstène (WSe2), des nanotubes de séléniure de molybdène (MoSe2), des nanotubes de dioxyde de titane (TiO2) ou des nanotubes de trioxyde de molybdène (MoO3), ou un de leurs mélanges ;
- les nanotubes organiques, notamment choisis dans le groupe constitué par des nanotubes de carbone, des nanotubes de peptides, des nanotubes de peptides cycliques, des nanotubes de molécules transmembranaires, des nanotubes d'éther couronnes, des nanotubes de porphyrines, des nanotubes d'aquaporine, des nanotubes de gramicidine, des nanotubes de polymères, des nanotubes formés par autoassemblage de molécules organiques, ou un de leurs mélanges ;
- les nanofils notamment choisis dans le groupe constitué par des nanofils d'or (Au), des nanofils d'argent (Ag), des nanofils de nickel (Ni), des nanofils de platine (Pt), des nanofils de silicium (Si), des nanofils de nitrure de gallium (GaN), des nanofils de phosphure d'indium (InP), des nanofils de dioxyde de silicium (SiO2), des nanofils de dioxyde de titane (TiO2), des nanofils d'oxyde de zinc (ZnO), des nanofils de 1,5-diaminoanthraquinone, des nanofils d'ADN (pour « Acide DésoxyriboNucléique »), des nanofils constitués de nanotubes, ou un de leurs mélanges.

Lorsque l'invention concerne des nano-tubes de carbone, les nano-tubes de carbone peuvent être des nano-tubes à simple paroi, à double paroi ou multi-parois. La densité des nano-tubes est comprise, par exemple, entre 10⁴ et 10¹³ nano-tubes/cm² et, plus particulièrement, entre 10⁸ et 10¹¹ nano-tubes/cm². Le diamètre interne des nano-tubes est par exemple compris entre 0,5nm et 100nm (plus particulièrement entre 0,5nm et 10nm) et le diamètre externe est par exemple compris entre 0,5nm et 500nm (plus particulièrement entre 1nm et 100nm).

### Brève description des figures

D'autres caractéristiques et avantages de l'invention apparaîtront à la lecture de modes de réalisation faits en référence aux figures jointes, parmi lesquelles :
- la figure 1 représente, de façon symbolique, une découpe de tapis de nano-tubes par attaque transverse selon le procédé de l'invention ;
- la figure 2 représente, de façon symbolique, une découpe de tapis de nano-tubes par attaque transverse avec une grande profondeur de champ, selon le procédé de l'invention ;
- la figure 3 représente, de façon symbolique, une découpe de tapis de nano-tubes à l'aide d'une nappe laser selon le procédé de l'invention ;
- la figure 4 représente, de façon symbolique, un décollement de tapis de nano-tubes selon le procédé de l'invention ;
- la figure 5 représente un tapis de nano-tubes obtenu à la suite d'une découpe en biais des nano-tubes selon le procédé de l'invention ;
- la figure 6 représente le schéma de principe d'un dispositif de découpe de tapis de nano-tubes apte à mettre en oeuvre le procédé de l'invention ;
- la figure 7 représente un mode de réalisation particulier d'un élément du dispositif représenté en figure 6 ;
- la figure 8 représente un élément constitutif du dispositif de la figure 6, selon le mode de réalisation préférentiel de l'invention ;
- la figure 9 illustre la formation des signaux impulsionnels laser qui sont utilisés pour la mise en oeuvre du procédé de découpe de l'invention ;
- les figures 10 et 11 représentent, à titre d'exemples, des photographies de résultats de découpe obtenus par le procédé de l'invention.

Sur toutes les figures, les mêmes références désignent les mêmes éléments.

### Exposé détaillé de modes de réalisation particuliers de l'invention.

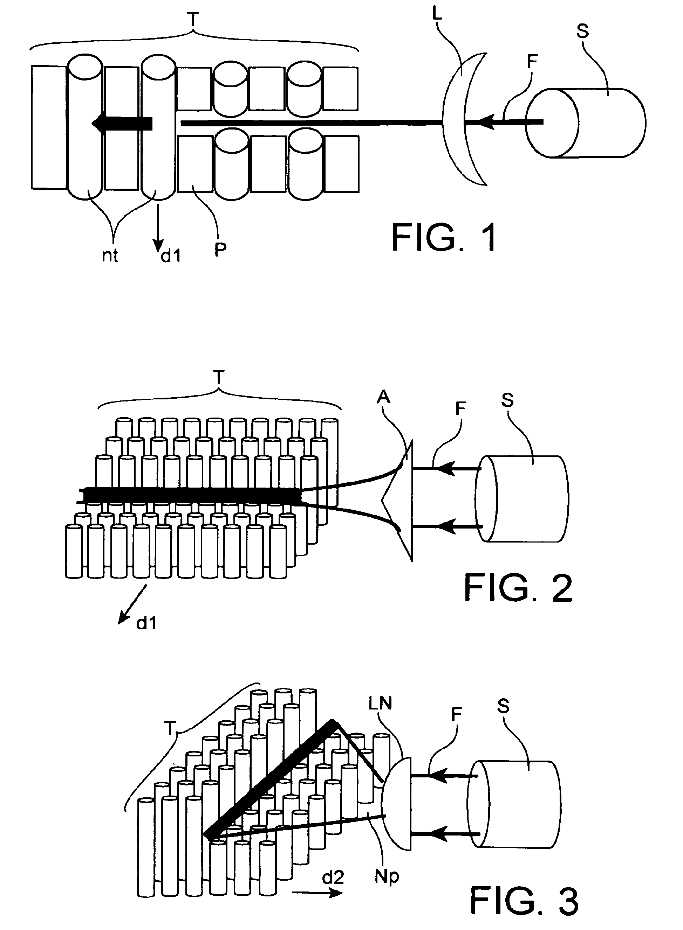

La figure 1 représente, de façon symbolique, une découpe de tapis de nano-tubes par attaque transverse selon l'invention.

Un faisceau F d'impulsions laser émises par une source laser S est focalisé, par un dispositif de focalisation L, sur l'épaisseur d'un tapis T de nano-tubes nt. Les nano-tubes nt sont enrobés dans un polymère P qui participe au maintien des nano-tubes. De façon plus générale, cependant, l'invention concerne également, et de façon très avantageuse, le cas où les nano-tubes ne sont pas enrobés de polymère, mais où ce sont les seules forces de Van der Waals entre les nano-tubes qui participent au maintien du tapis. Le faisceau F attaque le tapis sur son épaisseur. Le tapis se déplace rectilignement selon une direction d1 sensiblement perpendiculaire à l'axe de propagation des impulsions du faisceau F. La direction d1 peut être unidirectionnelle comme représenté sur la figure 1 ou bi-directionnelle (mouvement de va-et-vient). Les impulsions laser pénètrent ainsi progressivement le tapis de nano-tubes de sorte que deux tapis de nano-tubes finissent par être réalisés à partir du tapis T initial. Le tapis T initial a, par exemple, une épaisseur égale à un ou plusieurs millimètres et une longueur comprise, par exemple, entre un centimètre et plusieurs dizaines de centimètres. L'opération de découpe peut être répétée à plusieurs reprises de sorte qu'il est possible de former plusieurs tapis de nano-tubes dont les longueurs sont identiques à celle du tapis T initial et dont l'épaisseur peut atteindre une valeur avantageusement très faible, par exemple inférieure à 100µm, avec une précision de plus ou moins 5µm.

Dans un mode de réalisation particulier de l'invention, plusieurs tapis de nano-tubes peuvent être réalisés simultanément à l'aide de plusieurs faisceaux laser parallèles émis à partir d'une ou de plusieurs sources laser.

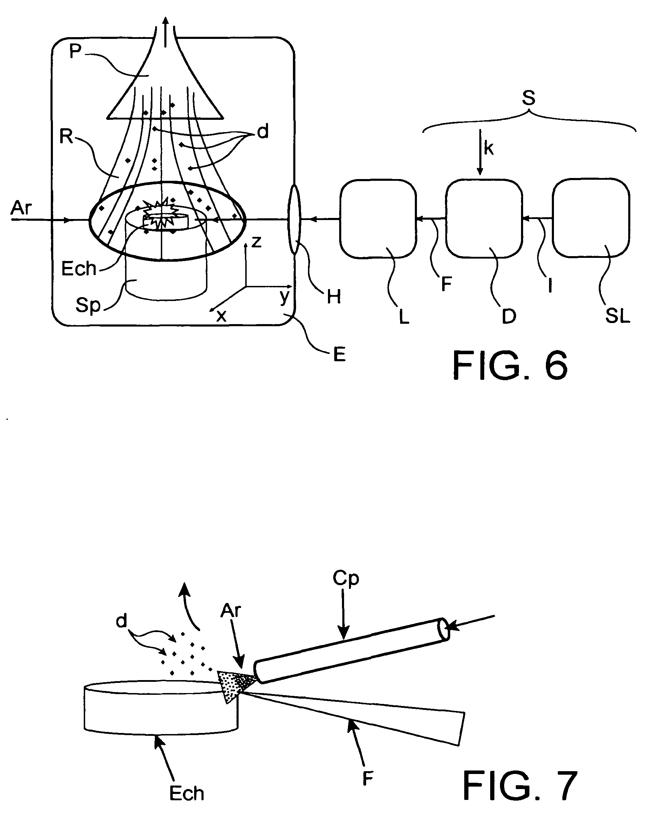

Comme cela sera précisé ultérieurement (cf. figure 6), pour réaliser une découpe telle que mentionnée ci-dessus, les impulsions laser sont caractérisées, de façon préférentielle, par les grandeurs suivantes :
- une durée comprise entre 1 et 300 Femtosecondes;
- toute longueur d'onde compatible avec la génération d'impulsions ayant la durée souhaitée, par exemple 800nm ;
- une fréquence de répétition comprise entre 10Hz et 100kHz ;
- une polarisation rectiligne des impulsions du faisceau laser;
- une énergie de chaque impulsion comprise entre 0,1µJ et 10mJ ;
- un diamètre du faisceau laser compris entre 0,1cm et quelques centimètres.

La figure 2 représente, de façon symbolique, une découpe de tapis de nano-tubes avec une grande profondeur de champ, selon le procédé de l'invention.

Les impulsions du faisceau laser F sont ici focalisées à l'aide d'un dispositif apte à réaliser une focalisation sur une distance de plusieurs centimètres dans l'axe du faisceau laser, par exemple une lentille de type conique ou un axicon A. Pour effectuer la découpe, le tapis T de nano-tubes se déplace par rapport au faisceau F dans une direction d1 sensiblement perpendiculaire à l'axe de propagation du faisceau F. La découpe du tapis de nano-tubes conduit ici aussi à la formation de deux tapis séparés. Pour des raisons de clarté, la figure 2 représente uniquement l'action du faisceau laser dans l'épaisseur du tapis de nano-tubes et non les deux tapis de nano-tubes qui se forment.

La figure 3 représente, de façon symbolique, une découpe de tapis de nano-tubes à l'aide d'une nappe laser selon le procédé de l'invention.

Les impulsions du faisceau laser F sont ici focalisées à l'aide d'un dispositif apte à réaliser une focalisation sur une distance de plusieurs centimètres perpendiculaire à l'axe du faisceau laser, par exemple une lentille de type cylindrique LN. Le faisceau laser F est alors élargi sous la forme d'une nappe laser Np. Pour effectuer la découpe, le tapis de nano-tubes se déplace, vers la source laser S, dans une direction d2 dont la direction est sensiblement parallèle à la nappe laser Np et perpendiculaire à l'épaisseur du tapis de nano-tubes. La découpe du tapis de nano-tubes conduit ici aussi à la formation de deux tapis distincts. Pour des raisons de clarté, la figure 3 représente uniquement l'action du faisceau laser dans l'épaisseur du tapis de nano-tubes et non les deux tapis de nano-tubes qui se forment.

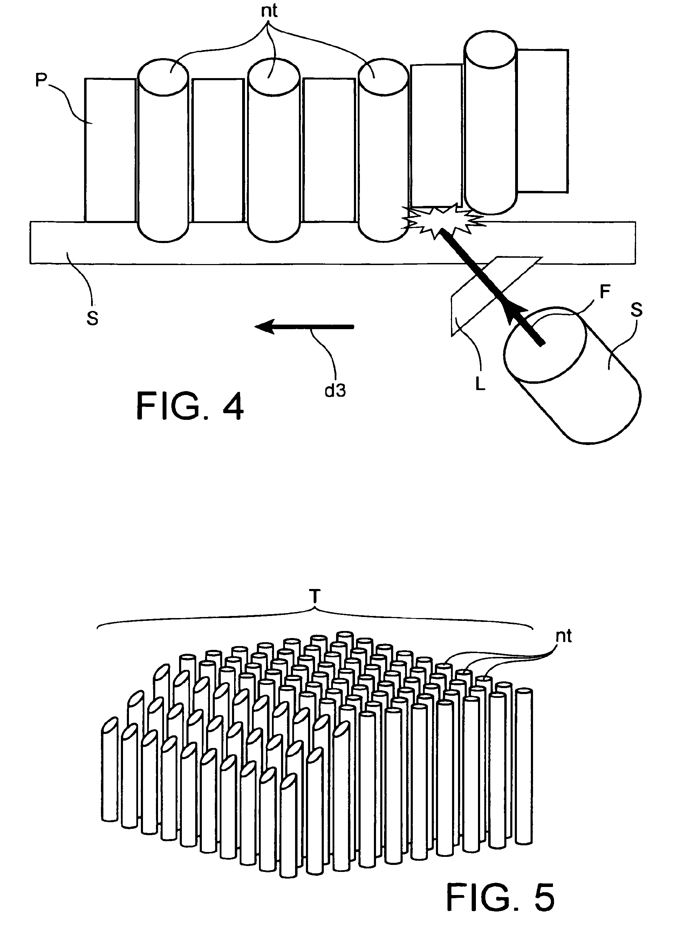

La figure 4 représente une opération de découpe d'un composite constitué d'un tapis de nano-tubes et d'un substrat Su sur lequel le tapis est formé. La découpe du composite conduit à décoller le tapis de nano-tubes du substrat Su à l'aide d'un faisceau F d'impulsions laser. Les caractéristiques des impulsions laser sont, par exemple, dans la gamme des caractéristiques mentionnées précédemment en référence à la figure 1.

La figure 5 représente un tapis de nano-tubes dont une partie est usinée en biais selon le procédé de l'invention. Pour obtenir un tel résultat, le faisceau laser attaque le tapis de nano-tubes en biais, avec un angle d'attaque avantageusement quelconque.

La figure 6 représente le schéma de principe d'un dispositif apte à mettre en oeuvre le procédé de découpe de l'invention.

Le dispositif comprend une source SL d'impulsions laser I, un dispositif D apte à mettre en forme les impulsions laser I sous la forme du faisceau d'impulsions F, un dispositif L de focalisation du faisceau F et une enceinte de confinement E où l'échantillon Ech à découper est placé sur un support apte à se déplacer en translation et/ou en rotation dans le volume de l'enceinte.

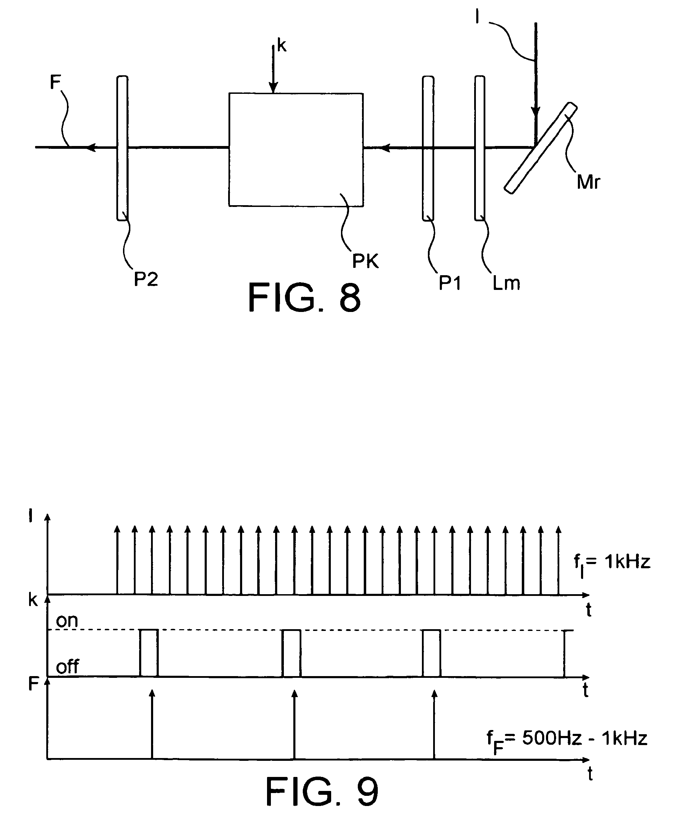

Les impulsions laser I émises par la source laser SL ont une durée, par exemple, de quelques dizaines de Femtosecondes. Plus généralement, la durée des impulsions laser est comprise entre 1 et 300 Femtosecondes. Comme cela sera précisé ultérieurement en référence à la figure 8, le dispositif D de mise en forme des impulsions laser comprend des moyens aptes à ajuster l'énergie des impulsions laser, des moyens aptes à régler la fréquence de répétition des impulsions laser et des moyens aptes à polariser rectilignement les impulsions laser. Les impulsions laser polarisées rectilignement ont, de façon générale, une composante selon l'axe des nano-tubes et une composante selon un axe perpendiculaire à l'axe des nano-tubes. La polarisation des impulsions laser peut dépendre de la chiralité des nano-tubes. De façon préférentielle, la polarisation rectiligne des nano-tubes est parallèle à l'axe des nano-tubes ou perpendiculaire à l'axe des nano-tubes. Les impulsions mises en forme délivrées par le dispositif D sont ensuite focalisées par le dispositif de focalisation L. Le dispositif de focalisation L est constitué, par exemple, de une ou plusieurs lentilles ou de un ou plusieurs axicons. Le diamètre de la tache focale du faisceau d'impulsions est déterminé par le choix de l'optique de focalisation. Ce diamètre est typiquement compris entre 10µm et 500µm et, de préférence, entre 20µm et 80µm. La longueur de Rayleigh est également déterminée par le choix de l'optique de focalisation. Elle est typiquement comprise entre 2,5mm et 50cm. L'axicon est choisi, par exemple, pour obtenir de grandes longueurs de Rayleigh. La fluence du faisceau laser qui est souhaitée au niveau de l'échantillon est obtenue par le choix de l'énergie de chaque impulsion laser combiné au choix du diamètre de la tache focale au niveau de l'échantillon. La fluence est typiquement comprise, en fonction de l'utilisation souhaitée, entre 1µJ/cm² et 20J/cm². A titre d'exemple non limitatif, la fluence est de 3J/cm² pour une lentille L de distance focale égale à 30cm, un faisceau incident de 7mm de diamètre, des impulsions de 100µJ par impulsion. Dans ce cas, la longueur de Rayleigh est de 1cm. L'échantillon Ech placé dans l'enceinte E est apte à se déplacer en translation et/ou rotation dans l'espace de l'enceinte E référencé par rapport à un trièdre direct (x, y, z), le plan z=0 étant un plan parallèle à la surface du composite. Un hublot H transparent à la longueur d'onde du faisceau F est formé dans la paroi de l'enceinte E afin de laisser passer les impulsions focalisées qui atteignent alors l'échantillon. De l'argon sous pression Ar est introduit dans l'enceinte E sous la forme d'un rideau R qui s'évacue, par le haut de l'enceinte, à l'aide d'un dispositif de pompage P. L'opération de découpe de la structure s'accompagne de la formation de débris d. Les débris d sont acheminés par le flux d'argon R et évacués, hors de l'enceinte E, à l'aide du rideau d'argon.

La figure 7 représente un complément possible au dispositif représenté en figure 6. L'élément particulier de la figure 7 est un système destiné à empêcher le dépôt des débris sur l'échantillon. L'arrivée de l'argon se fait ici au plus près de l'échantillon, à l'aide d'un capillaire Cp. La valeur « élevée » du débit d'argon permet de réduire fortement le dépôt des débris éjectés lors de la découpe sur la partie du tapis découpée. Les débris d qui se forment sont évacués de l'enceinte avec le gaz (système de pompage).

La figure 8 représente une vue détaillée d'un mode de réalisation préférentiel du dispositif D apte à mettre en forme les impulsions laser délivrées par la source SL. Le dispositif D comprend des moyens (Lm, P1) aptes à ajuster l'énergie des impulsions laser, des moyens (PK) aptes à régler la fréquence de répétition des impulsions laser et des moyens (P2) aptes à polariser rectilignement les impulsions laser. Dans un mode de réalisation préférentiel, le dispositif D comprend également un dispositif apte à orienter les impulsions laser dans la direction souhaitée, par exemple un miroir Mr.

Les moyens aptes à ajuster l'énergie des impulsions laser comprennent, par exemple, une lame demi-onde Lm et un premier polariseur rectiligne P1. Les moyens aptes à régler la fréquence de répétition sont constitués, par exemple, de polariseurs et d'une cellule de Pockels PK commandée par un signal de commande k. Les moyens pour polariser rectilignement les impulsions sont constitués, par exemple, d'un polariseur P2. La lame demi-onde Lm et le polariseur P1 permettent d'ajuster l'énergie des impulsions laser de sorte que l'énergie de chaque impulsion laser soit comprise entre 0,1µJ et 10mJ (préférentiellement entre 1µJ et 100µJ). Les impulsions laser dont l'énergie est ajustée pénètrent ensuite dans la cellule de Pockels PK, laquelle permet de régler leur fréquence de répétition à la valeur souhaitée selon l'intervention choisie. La fréquence de répétition des impulsions I qui pénètrent dans la cellule de Pockels est sensiblement comprise entre 1kHz et 10kHz. La fréquence de répétition des impulsions qui sortent de la cellule de Pockels est préférentiellement réglée sur une valeur comprise entre 10Hz et la fréquence de répétition des impulsions entrantes. La fréquence de répétition des impulsions laser est ajustée en fonction de la vitesse de découpe souhaitée. Plus la fréquence de répétition est élevée, plus la découpe s'effectue rapidement. La fréquence de répétition peut toutefois devoir être diminuée pour être adaptée à la vitesse de déplacement de l'échantillon par rapport au faisceau laser. La raison de cette diminution de la fréquence de répétition est la nécessité de limiter le recouvrement local des impulsions laser sur l'échantillon, lequel recouvrement conduit à des effets thermiques nuisibles. A titre d'exemple non limitatif, la vitesse de déplacement d'un échantillon peut être comprise entre 100microns/s et 1,5mm/s.

La figure 9 illustre le processus de formation des impulsions du faisceau F à partir des impulsions I émises par la source laser. Trois signaux différents sont représentés sur la figure 9, à savoir :
- les impulsions I qui sont émises par la source laser avec une fréquence de répétition f_{I} par exemple égale à 1kHz ;
- le signal de commande k de la cellule de Pockels qui autorise ou non le transfert des impulsions selon un état passant (état « ON ») ou bloqué (état « OFF ») ;
- le faisceau F des impulsions qui sont délivrées en sortie du polariseur P2 et dont la fréquence de répétition f_{F} est par exemple comprise entre 500Hz et 1kHz.

Le tableau 1 ci-dessous résume, à titre d'exemple non limitatif, un certain nombre de caractéristiques des impulsions du faisceau laser F (fluence et fréquence de répétition) en fonction des interventions souhaitées.

**TABLEAU 1**

| Fluence (mJ/cm² ) | Fréquence f_{F} de répétition des impulsions | Intervention |
|---|---|---|
| >50 | 10kHz | Découpe grossière d'un composite ou d'un tapis de nano-tubes |
| 10 à 50 | 10Hz | Découpe précise d'un composite ou d'un tapis de nano-tubes |
| <10 | 10Hz | Ouverture des têtes des nano-tubes d'un tapis de nano-tubes |

Le dispositif de l'invention permet avantageusement de maîtriser l'énergie déposée par tir d'impulsion et par unité de surface. A cette fin, les principaux paramètres de réglage sont :
- l'énergie d'une impulsion,
- la fréquence de répétition des impulsions, et
- la vitesse de défilement du composite lors d'une découpe, ce qui conduit à un taux de recouvrement spatial des impulsions successives.

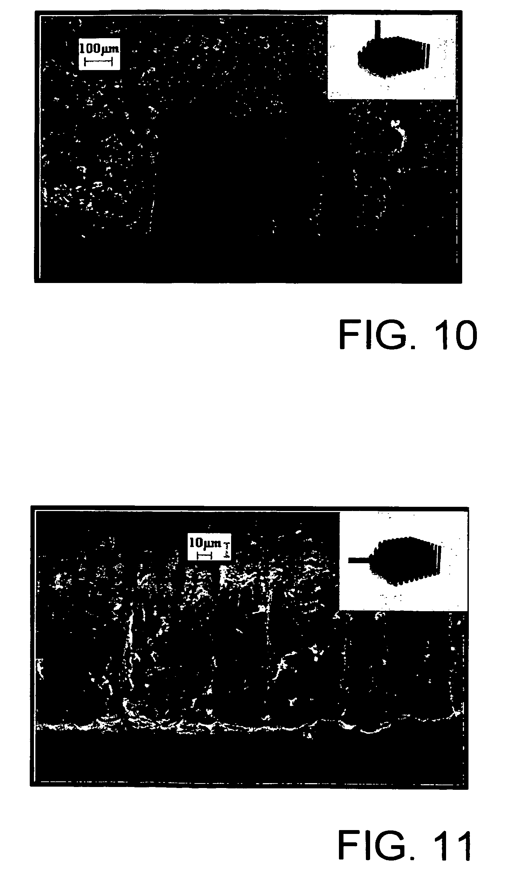

Les figures 10 et 11 représentent des photographies de résultats de découpe obtenus par le procédé de l'invention. Le tapis de nano-tubes est ici usiné en biais. La figure 10 représente une vue de dessus du tapis de nano-tubes et la figure 11 représente une vue latérale du tapis de nano-tubes. Ces photographies montrent clairement la précision et la propreté de la découpe selon le procédé de l'invention.

## Revendications

1. Dispositif de découpe d'une structure comprenant des nano-objets filaires sensiblement orientés selon un même axe, le dispositif comprenant:
- une source laser (SL) apte à émettre un faisceau laser sous la forme d'impulsions laser (I) ayant une largeur comprise entre 1 Femtoseconde et 300 Femtosecondes ;
- des moyens (Lm, P1) aptes à ajuster l'énergie de chaque impulsion laser émise entre 0,1µJ et 10mJ ;
- des moyens (PK) aptes à régler une fréquence de répétition des impulsions laser émises entre 10Hz et 10kHz ; et
- une enceinte de confinement (E) qui comprend :
a) un hublot (H) transparent à la longueur d'onde des impulsions laser,
b) un support (SP) sur lequel la structure à découper est placée, et
c) des moyens (P) pour évacuer hors de l'enceinte les débris (d) qui résultent de la découpe ; et **caractérisé en ce qu'**il comporte :
- des moyens (P2) aptes à polariser rectilignement les impulsions laser émises de sorte qu'une impulsion laser soit constituée d'une première composante selon l'axe des nano-objets et/ou d'une seconde composante selon un axe perpendiculaire à l'axe des nano-objets;
- des moyens (L) aptes à focaliser, sur la structure, les impulsions laser sur une distance de plusieurs centimètres, une tache focale du faisceau des impulsions laser étant comprise entre 10µm et 500µm, et **en ce que** ladite enceinte comporte des moyens aptes à déplacer le support de sorte qu'il en résulte un déplacement relatif du faisceau laser par rapport aux nano-objets filaires de la structure.

2. Dispositif selon la revendication 1, dans lequel les moyens (Lm, P1) aptes à ajuster l'énergie de chaque impulsion laser émise entre 0,1µJ et 10mJ comprennent une lentille demi-onde (Lm) et un polariseur (P1) et les moyens (CK) aptes à régler une fréquence de répétition des impulsions laser émises entre 10Hz et 10kHz comprennent une cellule de Pockels (PK).

3. Dispositif selon l'une quelconque des revendications 1 à 2, dans lequel les moyens pour évacuer, hors de l'enceinte, les débris qui résultent de la découpe comprennent une arrivée de gaz sous pression placée à proximité de la structure et des moyens d'évacuation (P) du gaz aptes à entraîner les débris (d) qui résultent de la découpe hors de l'enceinte.

4. Dispositif selon l'une quelconque des revendications 1 à 3, dans lequel les moyens aptes à focaliser les impulsions laser polarisées rectilignement sont constitués d'au moins une lentille de type conique ou d'au moins un axicon (A) qui focalise les impulsions laser sous la forme d'un faisceau rectiligne ayant un axe sensiblement perpendiculaire à l'axe des nano-objets filaires.

5. Dispositif selon l'une quelconque des revendications 1 à 3, dans lequel les moyens aptes à focaliser les impulsions laser polarisées rectilignement sont constitués d'une lentille de type cylindrique (LN) qui focalise les impulsions laser sous la forme d'une nappe laser (Np) qui définit un plan sensiblement perpendiculaire à l'axe des nano-objets filaires.

6. Procédé de découpe d'une structure comprenant des nano-objets filaires (nt) à l'aide d'un dispositif selon l'une quelconque des revendications 1 à 5, dans lequel :
a) les impulsions laser polarisées rectilignement qui sont focalisées sur la structure ont une direction de propagation sensiblement perpendiculaire à une surface plane qui définit une épaisseur de la structure, et
b) la structure (T) est mue selon une direction parallèle à ladite surface plane et perpendiculaire à la direction de propagation des impulsions.

7. Procédé de découpe d'une structure comprenant des nano-objets filaires (nt) à l'aide d'un dispositif selon la revendication 6, dans lequel les impulsions laser polarisées rectilignement sont focalisées sous la forme d'une nappe laser (Np) sur une épaisseur de la structure, la nappe laser (Np) définissant un plan sensiblement perpendiculaire à un plan défini par l'épaisseur de la structure, et en ce que la direction selon laquelle la structure est mue est sensiblement perpendiculaire au plan défini par l'épaisseur de la structure.

8. Procédé selon la revendication 6 ou 7, dans lequel la structure est constituée d'un tapis de nano-objets filaires collés sur un substrat (Su), l'opération de découpe consistant à décoller le tapis de nano-objets filaires du substrat.

9. Procédé selon la revendication 6 ou 7, dans lequel la structure comprend un tapis de nano-objets filaires (T), l'opération de découpe étant un amincissement du tapis de nano-objets filaires.

10. Procédé selon la revendication 6 ou 7, dans lequel la structure comprend un tapis de nano-objets filaires munis de têtes ou extrémités, l'opération de découpe étant une découpe des têtes ou extrémités des nano-objets filaires.

11. Procédé selon l'une quelconque des revendications 6 à 10, dans lequel les nano-objets filaires sont des nanotubes inorganiques, notamment choisis dans le groupe constitué par des nanotubes d'imogolite, des nanotubes de nitrure de bore (BN), des nanotubes d'oxyde de zinc (ZnO), des nanotubes de nitrure de gallium (GaN), des nanotubes de nitrure de silicium (Si3N4), des nanotubes du bisulfure de tungstène (WS2), des nanotubes de bisulfure de molybdène (MoS2), des nanotubes de séléniure de tungstène (WSe2), des nanotubes de séléniure de molybdène (MoSe2), des nanotubes de dioxyde de titane (TiO2) ou des nanotubes de trioxyde de molybdène (MoO3), ou un de leurs mélanges.

12. Procédé selon l'une quelconque des revendications 6 à 10, dans lequel les nano-objets filaires sont des nanotubes organiques, notamment choisis dans le groupe constitué par des nanotubes de carbone, des nanotubes de peptides, des nanotubes de peptides cycliques, des nanotubes de molécules transmembranaires, des nanotubes d'éther couronnes, des nanotubes de porphyrines, des nanotubes d'aquaporine, des nanotubes de gramicidine, des nanotubes de polymères, des nanotubes formés par autoassemblage de molécules organiques, ou un de leurs mélanges.

13. Procédé selon l'une quelconque des revendications 6 à 10, dans lequel les nano-objets filaires sont des nanofils notamment choisis dans le groupe constitué par des nanofils d'or (Au), des nanofils d'argent (Ag), des nanofils de nickel (Ni), des nanofils de platine (Pt), des nanofils de silicium (Si), des nanofils de nitrure de gallium (GaN), des nanofils de phosphure d'indium (InP), des nanofils de dioxyde de silicium (Si02), des nanofils de dioxyde de titane (TiO2), des nanofils d'oxyde de zinc (ZnO), des nanofils de 1,5-diaminoanthraquinone, des nanofils d'ADN (ADN pour « Acide DésoxyriboNucléique »), des nanofils constitués de nanotubes, ou un de leurs mélanges.

## Patentansprüche

1. Vorrichtung zum Zerschneiden einer Struktur, die drahtförmige, nanoskalige Objekte enthält, die im Wesentlichen in einer gleichen Achse ausgerichtet sind, wobei die Vorrichtung enthält:
- eine Laserquelle (SL), die dazu geeignet ist, einen Laserstrahl in Form von Laserpulsen (I) mit einer Weite zwischen 1 Femtosekunde und 300 Femtosekunden auszusenden;
- eine Einrichtung (Lm, P1), die dazu geeignet ist, die Energie eines jeden ausgesendeten Laserpulses zwischen 0,1 µJ und 10 mJ abzustimmen;
- eine Einrichtung (PK), die dazu geeignet ist, eine Wiederholungsfrequenz der ausgesendeten Laserpulse zwischen 10 Hz und 10 kHz einzustellen; und
- einen Sicherheitsbehälter (E), der enthält:
a) ein für die Wellenlänge der Laserpulse transparentes Fenster (H),
b) einen Träger (SP), auf dem die zu zerschneidende Struktur angeordnet ist, und
c) eine Einrichtung (P), um aus dem Behälter Trümmer (d) zu abzuleiten, die beim Zerschneiden entstehen; und **dadurch gekennzeichnet ist, dass** sie enthält:
- eine Einrichtung (P2), die dazu geeignet ist, die ausgesendeten Laserpulse geradlinig zu polarisieren, so dass ein Laserpuls aus einer ersten Komponente in der Achse der nanoskaligen Objekte und/oder einer zweiten Komponente in einer Achse senkrecht zur Achse der nanoskaligen Objekte besteht;
- eine Einrichtung (L), die dazu geeignet ist, auf die Struktur Laserpulse über eine Entfernung von mehreren Zentimetern zu fokussieren, wobei ein Brennfleck des Strahls der Laserpulse zwischen 10 µm und 500 µm beträgt, und dass der Behälter eine Einrichtung enthält, die dazu geeignet ist, den Träger so zu verlagern, dass sich eine relative Verlagerung des Laserstrahls gegenüber den drahtförmigen, nanoskaligen Objekten der Struktur ergibt.

2. Vorrichtung nach Anspruch 1, wobei die Einrichtung (Lm, P1), die dazu geeignet ist, die Energie eines jeden ausgesendeten Laserpulses zwischen 0,1 µJ und 10 mJ abzustimmen, eine Halbwellen-Linse (Lm) und einen Polarisator (P1) aufweist und wobei die Einrichtung (CK), die dazu geeignet ist, eine Wiederholungsfrequenz der ausgesendeten Laserpulse zwischen 10 Hz und 10 kHz einzustellen, eine Pockels-Zelle (PK) aufweist.

3. Vorrichtung nach einem der Ansprüche 1 bis 2, wobei die Einrichtung zum Ableiten von beim Zerschneiden entstehenden Trümmern aus dem Behälter eine Druckgaszufuhr aufweist, die in der Nähe der Struktur angeordnet ist, sowie eine Ableiteinrichtung (P) zum Ableiten von Gas, die dazu geeignet ist, die Trümmer (d), die beim Zerschneiden entstehen, aus dem Behälter heraus mitzureißen.

4. Vorrichtung nach einem der Ansprüche 1 bis 3, wobei die Einrichtung, die dazu geeignet ist, geradlinig polarisierte Laserpulse zu fokussieren, aus zumindest einer Linse konischer Art oder aus zumindest einem Axicon (A) besteht, das die Laserpulse in Form eines geradlinigen Strahls mit einer Achse im Wesentlichen senkrecht zur Achse der drahtförmigen, nanoskaligen Objekte fokussiert.

5. Vorrichtung nach einem der Ansprüche 1 bis 3, wobei die Einrichtung, die dazu geeignet ist, geradlinig polarisierte Laserpulse zu fokussieren, aus einer Linse zylindrischer Art (LN) besteht, die die Laserpulse in Form einer Laserschicht (Np) fokussiert, die eine Ebene definiert, die im Wesentlichen senkrecht zur Achse der drahtförmigen, nanoskaligen Objekte verläuft.

6. Verfahren zum Zerschneiden einer Struktur, die drahtförmige, nanoskalige Objekte (nt) enthält, mit Hilfe einer Vorrichtung nach einem der Ansprüche 1 bis 5, wobei:
a) die geradlinig polarisierten Laserpulse, die auf die Struktur fokussiert werden, eine Ausbreitungsrichtung haben, die im Wesentlichen senkrecht zu einer ebenen Fläche verläuft, welche eine Dicke der Struktur definiert, und
b) die Struktur (T) in einer Richtung parallel zur ebenen Fläche und senkrecht zur Ausbreitungsrichtung der Pulse bewegt wird.

7. Verfahren zum Zerschneiden einer Struktur, die drahtförmige, nanoskalige Objekte (nt) enthält, mit Hilfe einer Vorrichtung nach Anspruch 6, wobei die geradlinig polarisierten Laserpulse in Form einer Laserschicht (Np) auf eine Dicke der Struktur fokussiert werden, wobei die Laserschicht (Np) eine Ebene im Wesentlichen senkrecht zu einer Ebene definiert, die von der Dicke der Struktur definiert wird, und wobei die Richtung, in welcher die Struktur bewegt wird, im Wesentlichen senkrecht zur Ebene verläuft, die von der Dicke der Struktur definiert wird.

8. Verfahren nach Anspruch 6 oder 7, wobei die Struktur aus einem Teppich von auf ein Substrat (Su) aufgeklebten drahtförmigen, nanoskaligen Objekten besteht, wobei der Schneidvorgang darin besteht, den Teppich aus drahtförmigen, nanoskaligen Objekten vom Substrat zu lösen.

9. Verfahren nach Anspruch 6 oder 7, wobei die Struktur einen Teppich aus drahtförmigen, nanoskaligen Objekten (T) aufweist, wobei der Schneidvorgang ein Verjüngen des Teppichs aus drahtförmigen, nanoskaligen Objekten ist.

10. Verfahren nach Anspruch 6 oder 7, wobei die Struktur einen Teppich aus drahtförmigen, nanoskaligen Objekten aufweist, die mit Köpfen bzw. Endabschnitten versehen sind, wobei der Schneidvorgang ein Abschneiden der Köpfe bzw. Endabschnitte von den drahtförmigen, nanoskaligen Objekten ist.

11. Verfahren nach einem der Ansprüche 6 bis 10, wobei die drahtförmigen, nanoskaligen Objekte anorganische Nanoröhren sind, die insbesondere ausgewählt sind aus der Gruppe umfassend Nanoröhren aus Imogolit, Nanoröhren aus Bornitrid (BN), Nanoröhren aus Zinkoxid (ZnO), Nanoröhren aus Galliumnitrid (GaN), Nanoröhren aus Siliciumnitrid (Si3N4), Nanoröhren aus Wolframdisulfid (WS2), Nanoröhren aus Molybdändisulfid (MoS2), Nanoröhren aus Wolframselenid (WSe2), Nanoröhren aus Molybdänselenid (MoSe2), Nanoröhren aus Titandioxid (TiO2) oder Nanoröhren aus Molybdäntrioxid (MoO3) oder aus einem ihrer Gemische.

12. Verfahren nach einem der Ansprüche 6 bis 10, wobei die drahtförmigen, nanoskaligen Objekte organische Nanoröhren sind, die insbesondere ausgewählt sind aus der Gruppe umfassend Nanoröhren aus Kohlenstoff, Nanoröhren aus Peptiden, Nanoröhren aus zyklischen Peptiden, Nanoröhren aus transmembranären Molekülen, Nanoröhren aus Kronenether, Nanoröhren aus Porphyrinen, Nanoröhren aus Aquaporin, Nanoröhren aus Gramicidin, Nanoröhren aus Polymeren, Nanoröhren gebildet aus der Selbstorganisation von organischen Molekülen, oder aus einem ihrer Gemische.

13. Verfahren nach einem der Ansprüche 6 bis 10, wobei die drahtförmigen, nanoskaligen Objekte Nanodrähte sind, die insbesondere ausgewählt sind aus der Gruppe umfassend Nanodrähte aus Gold (Au), Nanodrähte aus Silber (Ag), Nanodrähte aus Nickel (Ni), Nanodrähte aus Platin (Pt), Nanodrähte aus Silicium (Si), Nanodrähte aus Galliumnitrid (GaN), Nanodrähte aus Indiumphosphid (InP), Nanodrähte aus Siliciumdioxid (SiO2), Nanodrähte aus Titandioxid (TiO2), Nanodrähte aus Zinkoxid (ZnO), Nanodrähte aus 1,5-Diaminoanthrachinon, Nanodrähte aus ADN (ADN für "Desoxyribonucleinsäure"), Nanodrähte aus Nanoröhren, oder aus einem ihrer Gemische.

## Claims

1. A device for cutting a structure including wire-like nanoscale objects roughly aligned in the same axis, the device comprising:
- a laser source (SL) able to emit a laser beam in the form of laser pulses of a width of between 1 femtosecond and 300 femtoseconds;
- means (Lm, P1) able to adjust the energy of each emitted laser pulse between 0.1 µJ and 10 mJ;
- means (PK) able to set a repetition frequency of the emitted laser pulses between 10 Hz and 10 kHz; and
- a containment enclosure (E) which includes:
a) an observation port (H) which is transparent to the wavelength of the laser pulses,
b) a bracket (SP) on which the structure to be cut is positioned, and
c) means (P) to remove from the enclosure debris resulting from the cutting;
and **characterized in that** it comprises:
- means (P2) able to polarise linearly the laser pulses emitted so that a laser pulse is constituted of a first component according to the axis of the nanoscale objects and/or a second component according to an axis perpendicular to the axis of the nanoscale objects,
- means (L) able to focus, on the structure, the laser pulses on a distance of several centimeters, a focal spot of the laser pulse beam being comprised between between 10µm and 500µm, and **in that** said enclosure comprises means able to move the bracket so as to cause a displacement of the laser beam relative to the wire-like nanoscale objects of the structure.

2. A device according to claim 1, in which the means (Lm, P1) able to adjust the energy of each laser pulse emitted between 0.1µJ and 10mJ include a half-wave lens (Lm) and a polariser (P1) and the means (CK) able to adjust a frequency of repetition of the laser pulses emitted between 10 Hz and 10 kHz include a Pockels cell (PK).

3. A device according to any one of claims 1 to 2, in which the means to evacuate, out of the enclosure, the debris resulting from the cutting include a pressurised gas inlet positioned close to the structure and means to evacuate (P) the gas able to convey the debris resulting from the cutting outside of the enclosure.

4. A device according to any one of claims 1 to 3, in which the means able to focus the linearly polarised laser pulses consist of at least a lens of conical type or at least an axicon (A) which focuses the laser pulses in the form of a linear beam having an axis roughly perpendicular to the axis of the wire-like nanoscale objects.

5. A device according to any one of claims 1 to 3, in which the means able to focus the linearly polarised laser pulses consist of a lens of cylindrical type (LN) which focuses the laser pulses in the form of a laser sheet (Np) which defines a plane roughly perpendicular to the axis of the wire-like nanoscale objects.

6. A method for cutting a structure including wire-like nanoscale objects (nt) using a device according to any one of claims 1 to 5, in which:
a) the linearly polarised laser beams which are focused on the structure have a propagation direction roughly perpendicular to a flat surface which defines a thickness of the structure, and
b) the structure (T) is moved in a direction parallel to the said flat surface and perpendicular to the propagation direction of the pulses.

7. A method for cutting a structure including wire-like nanoscale objects (nt) using a device according to claim 6, in which the linearly polarised laser pulses are focused in the form of a laser sheet (Np) on a thickness of the structure, where the laser sheet (Np) defines a plane roughly perpendicular to a plane defined by the thickness of the structure, and in that the direction in which the structure is moved is roughly perpendicular to the plane defined by the thickness of the structure.

8. A method according to claim 6 or 7, in which the structure consists of a carpet of wire-like nanoscale objects bonded to a substrate (Su), where the cutting operation consists in delaminating the carpet of wire-like nanoscale objects from the substrate.

9. A method according to claim 6 or 7, in which the structure includes a carpet of wire-like nanoscale objects (T), and where the cutting operation involves thinning the carpet of wire-like nanoscale objects.

10. A method according to claim 6 or 7, in which the structure includes a carpet of wire-like nanoscale objects having heads or ends, and where the cutting operation involves cutting the heads or ends of the wire-like nanoscale objects.

11. A method according to any one of claims 6 to 10, in which the wire-like nanoscale objects are inorganic nanotubes, notably those chosen from the group constituted by imogolite nanotubes, boron nitride nanotubes (BN), zinc oxide nanotubes (ZnO), gallium nitride nanotubes (GaN), silicon nitride nanotubes (Si3N4), tungsten disulfide nanotubes (WS2), molybdenum disulfide nanotubes (MoS2), tungsten selenide nanotubes (WSe2), molybdenum selenide nanotubes (MoSe2), titanium dioxide nanotubes (TiO2) or molybdenum trioxide nanotubes (MoO3), or one of their blends.

12. A method according to any one of claims 6 to 10, in which the wire-like nanoscale objects are organic nanotubes, notably chosen from the group constituted by carbon nanotubes, peptide nanotubes, cyclic peptide nanotubes, transmembrane molecule nanotubes, crown ether nanotubes, porphyrin nanotubes, aquaporin nanotubes, gramicidin nanotubes, polymer nanotubes, nanotubes formed by self-assembly of organic molecules, or one of their blends.

13. A method according to any one of claims 6 to 10, in which the wire-like nanoscale objects are nanowires, notably chosen from the group constituted by gold (Au) nanowires, silver (Ag) nanowires, nickel (Ni) nanowires, platinum (Pt) nanowires, silicon (Si) nanowires, gallium nitride (GaN) nanowires, indium phosphide (InP) nanowires, silicon dioxide (SiO2) nanowires, titanium dioxide (TiO2) nanowires, zinc oxide (ZnO) nanowires, 1,5-diaminoanthraquinone nanowires, DNA (DeoxyriboNucleic Acid) nanowires, nanowires consisting of nanotubes, or one of their blends.
